Europäisches Patentamt

European Patent Office

Office européen des brevets

(19)

(11) Publication number: **0 251 365**
**A2**

(12) # EUROPEAN PATENT APPLICATION

(21) Application number: **87201016.0**

(22) Date of filing: **01.06.87**

(51) Int. Cl.⁴: **F16F 9/08** , **F16F 9/34** , **F16F 9/49**

(30) Priority: **26.06.86 IT 8337686**

(43) Date of publication of application:
**07.01.88 Bulletin 88/01**

(84) Designated Contracting States:
**AT BE DE ES FR GB NL SE**

(71) Applicant: **INSA INDUSTRIA SISTEMI PER AUTO**
**Via dell'Industria 17**
**I-33028 Tolmezzo (UD)(IT)**

(72) Inventor: **Capellari, Elio**
**Via Moisesso 27**
**I-33100 Udine(IT)**
Inventor: **Giusta, Giovanni**
**Via Clavière 30**
**I-10044 Pianezza (TO)(IT)**
Inventor: **Cossetti, Giuliano**
**Via Val But 4**
**I-33028 Tolmezzo (UD)(IT)**

(74) Representative: **Petraz, Gilberto Luigi**
**G.L.P. S.a.s. di Gilberto Petraz P.le Cavedalis 6/2**
**I-33100 Udine(IT)**

(54) Oleopneumic suspension for vehicles having the functions of a shock absorber.

(57) Suspension of an oleopneumatic type for vehicles which has the functions of a shock absorber and comprises a plunger (11) with a tubular body (18) fitted so as to be able to slide within a cylinder (12) having a tubular body (19), both the plunger (11) and the cylinder (12) being closed at their free ends with a seal engagement, a bag-type diaphragm (23) being included in the plunger (11) with the tubular body (18) and separating a volume of gas (36) positioned between the diaphragm (23) and the tubular body (18) of the plunger (11) from a volume of oil (34) contained in the diaphragm (23) and in the tubular body (19) of the cylinder (12), the suspension including:
-the diaphragm (23) of a tubular, elongate shape with a corrugated peripheral conformation and an upper pointed, closed end (35),
-a ring (31) to anchor the diaphragm (23) between the tubular body (18) of the plunger (11) and a valve (22),

-a spring (15) for the mechanical storage of energy, which functions between the plunger (11) and the cylinder (12), and
-a valve (23) with two coaxial slide portions (25-26) able to move axially and resiliently resisted.

fig. 2 b

fig. 2 a

fig. 1

1a.

## "OLEOPNEUMATIC SUSPENSION FOR VEHICLES HAVING THE FUNCTIONS OF A SHOCK ABSORBER"

This invention concerns suspensions, advantageously oleopneumatic suspensions, which are suitable for employment with shock absorber functions on vehicles.

When the springs bend in the suspensions of motor vehicles and vehicles in general, they convert the action of impact caused by the roughness of roads into an action of deformation with a storage of energy.

When the springs are distended again and take up their original shape, there is an inverted conversion; the deformation action is converted into a release action for return of the energy, which is transmitted partly also to the bodywork and passengers.

It is therefore necessary to brake and control the deformation of the springs by the employment of shock absorbers to level the peaks of deformation coinciding with the occasional overloads.

If the shock absorber acts only to brake and control the distension of the spring and therefore only the recoil of the vehicle, it is called a single-acting shock absorber, whereas if it also brakes and controls the compression of the spring, it is called a double-acting shock absorber.

Modern vehicles generally comprise double-acting shock absorbers, which provide greater efficiency during distension of the spring, since during compression of the spring the braking action exerted by the spring through storage of energy is relied upon. Thus the shock absorber performs a greater task during the recoil of the vehicle.

Shock absorbers are of very great importance for comfort during travelling, for the working life of the various components of a vehicle and for the stability of the vehicle.

If the braking action of the shock absorber is inadequate, the distension of the springs may cause bouncing so violent that it lifts the wheels from the road and, especially on curves, causes dangerous heeling over through lack of adherence.

The working of shock absorbers is based on friction. Depending on whether the friction is friction between mechanical surfaces or friction due to the drawing of oil through suitable outflow spaces, the shock absorbers are divided between friction shock absorbers and oleodynamic shock absorbers. Instead, when the reverse expansion is compensated by a gaseous mass under pressure, they are called oleopneumatic shock absorbers.

The invention refers in particular to an oleopneumatic suspension consisting of a tubular plunger fitted so as to be able to slide, with a seal engagement, within a cylinder closed with a seal engagement, and of a deformable diaphragm accommodated within the plunger.

The diaphragm serves to separate and provide a seal between a volume of gas and a volume of liquid in such a way that the movements of the plunger within the cylinder cause variations in the volume of the gas and therefore compression and expansion of that volume of gas.

When an oleopneumatic suspension is employed, the drawing of the liquid through a flow regulator valve is converted into a variation of load at the ends of the element, depending on the speed of displacement of the plunger and therefore of the liquid.

Oleopneumatic suspensions are known.

US 2,308,404 (Thornhill) discloses an oleopneumatic suspension with a resilient diaphragm containing gas under pressure, which owing to the compression applied is further compressed by oil. The diaphragm moves from a position of a suspension without load to a position of compressed suspension without undergoing variations through extension or stretching.

Deformations along the lengthwise axis are uncertain and in general the deformations cannot be controlled.

The suspension provides also a pneumatically controlled valve which acts between two axially movable rings.

This patent discloses a suspension which in itself is very complex and comprises a valve that is not reliable and is difficult to set.

GB 844,653 (Girling) discloses a plunger and a diaphragm, which not only undergoes no extensions or stretching during working but also comprises a cross section with lengthwise ribs tending to provide radial deformations in the diaphragm; this invention too includes a valve for the passage of oil.

Deformations of the diaphragm take place in predetermined zones or folds spread along its lengthwise axis.

GB 825,094 (Armstrong) discloses an embodiment like GB 844,653, but its diaphragm has a corrugated confirmation, or sinusoidal development, with lengthwise extension. This corrugated conformation enables the diaphragm to be radially deformed without having to undergo extensions or stretching, since the development of the diaphragm when not under load is the same as or greater than the inner diameter of the seating in which the diaphragm is lodged.

In this case too the deformation of the diaphragm takes place in predetermined deformation zones or folds parallel to its lengthwise axis.

CH 369.667 (Lenina) discloses a diaphragm which expands without deformation and a valve to regulate the flow of oil. The diaphragm is shaped like a bag turned upside down.

FR 1.512.209 (Hoesck) discloses diaphragms which contain a liquid and diaphragms which contain a gaseous fluid.

US 3,625,321 (Lutz) discloses diaphragms which contain a gaseous fluid and do not extend or stretch during the extension phase. This invention provides for the deformation of the diaphragm to take place in predetermined deformation or folded zones parallel to the lengthwise axis of the diaphragm.

FR 2.526.903 (Guesdon) discloses diaphragms which contain gas and diaphragms which contain oil. The diaphragms of this patent have a closure stopper at one end and a tubular shape, with a section shaped like a cross when not loaded and with radial deformations occurring in predetermined deformation or folded zones parallel to the lengthwise axis of the diaphragm. The cross section of the diaphragm varies between the shape of a cross and that of a circle, and viceversa.

FR 8.403.158 (Delti) discloses a suspension of the same type as that of FR 2.526.903, the diaphragm being of a type undergoing radial deformation alone without any extension or stretching. The cross section of the diaphragm varies between a cross and a circular shape and viceversa and the perimeter of the cross section stays substantially constant, the outer diameter of the diaphragm when extended to the required value coinciding with the inner diameter of the containing chamber.

According to the type shown (the description in the text is inadequate) the diaphragm does not actually work as is indicated in the patent, and the deformation takes place in zones of lesser strength and not in a uniform manner.

These known embodiments entail a plurality of shortcomings and none of these known embodiments can be deemed satisfactory for the purposes required of an oleopneumatic suspension suited to the present requirements of motor vehicles and vehicles in general.

Moreover, the various known types have a complex structure, which entails high costs without ensuring thereby the continuity and long working life nowadays expected of this type of suspension.

One feature of the known types is that they have overcome, even though only partially a specific problem but without locating the same properly in the assemblage of problems belonging to a suspension and without embodying the solution in a product which can be used industrially at the present time.

With a view to obviating the drawbacks of the known types and producing a reliable oleopneumatic suspension, the present applicant has re-examined the problem as a whole and has embodied the solution according to the present invention.

Our invention therefore tends to offer a plurality of advantages which will become clear in the following description and which, as a whole, enable a new, reliable suspension to be obtained.

According to the invention a tubular plunger cooperates with a cylinder. Attainment of the maximum length of extension of the plunger/cylinder system is opposed by an energy storage spring.

In one embodiment of the invention a diaphragm immersed in a gas and containing oil is included within the tubular plunger.

The diaphragm has a ribbed conformation with continuous lengthwise corrugations and is continuously closed at its upper end, so that it appears as an open body in correspondence with a connection and control valve positioned within the pluger.

The diaphragm is made of a material which can be deformed in a resilient field, but does not necessarily have to consist of material of a type deemed resilient.

In the event of normal stresses the diaphragm does not undergo stretching or extensions except possibly to a small extent in its upper part near its continuous closure.

In the event of very great stresses the diaphragm is subject to stretching and extension of very small values such as will never act on the material within a field even close to the field where permanent deformations occur, that is to say, minimum remains of deformations when the stress is terminated (hysteresis of storage).

During absorption the deformation of the diaphragm takes place by sideways expansion and its corrugated profile does not necessarily have to extend until it becomes circular.

The jacket of the plunger consists of a thin tubular material and may comprise a control valve to regulate the pressure of the gas pre-loaded.

Suitable attachments and anchorages are included on the plunger and cylinder. The cylinder too may comprise a control valve to regulate the filling of oil.

The cylinder is made of a thin tubular element and comprises advantageously a jacket anchored to its tubular element and cooperating with the plunger.

The plunger valve consists of two axially movable, coaxial valve elements resiliently thrust against each other.

The diaphragm is anchored about the body containing the valve of the plunger and is secured with the help of the tubular body of the plunger.

The invention is therefore embodied with a suspension of an oleopneumatic type for vehicles which has the functions of a shock absorber and comprises a plunger with a tubular body fitted so as to be able to slide within a cylinder having a tubular body, both the plunger and the cylinder being closed at their free ends with a seal engagement, a bag-type diaphragm being included in the plunger with the tubular body and separating a volume of gas positioned between the diaphragm and the tubular body of the plunger from a volume of oil contained in the diaphragm and in the tubular body of the cylinder, the suspension being characterized in that it includes:
-the diaphragm of a tubular, elongate shape with a corrugated peripheral conformation and an upper pointed, closed end,
-a ring to anchor the diaphragm between the tubular body of the plunger and a valve,
-a spring for the mechanical storage of energy, which functions between the plunger and the cylinder, and
-a valve with two coaxial slide portions able to move axially and resiliently resisted.

The attached figures, which are given as non-restrictive examples, show the following:-

Fig.1 shows a vertical section of a suspension according to the invention;

Figs.2a and 2b show cross sections of the plunger and diaphragm in inactive and active positions respectively;

Figs.3, 4 and 5 show vertical, axial sections of the control valve which regulates the passage of oil, during various stages.

The figures show an oleopneumatic suspension 10 which comprises a plunger 11 and a cylinder 12. The plunger 11 consists of a tubular body 18, while the cylinder 12 consists of a tubular body 19.

A spring 15 is provided between the plunger 11 and cylinder 12 and has a thrust and absorption function, being positioned between an upper abutment 13 and a lower abutment 113 comprised in the cylinder 12 and plunger 11 respectively.

This spring serves to absorb impacts in the event of immediate, unexpected release of the system and also serves to increase rigidity in the event of great extensions, thus enabling problems linked to the heeling over of vehicles on bends to be avoided.

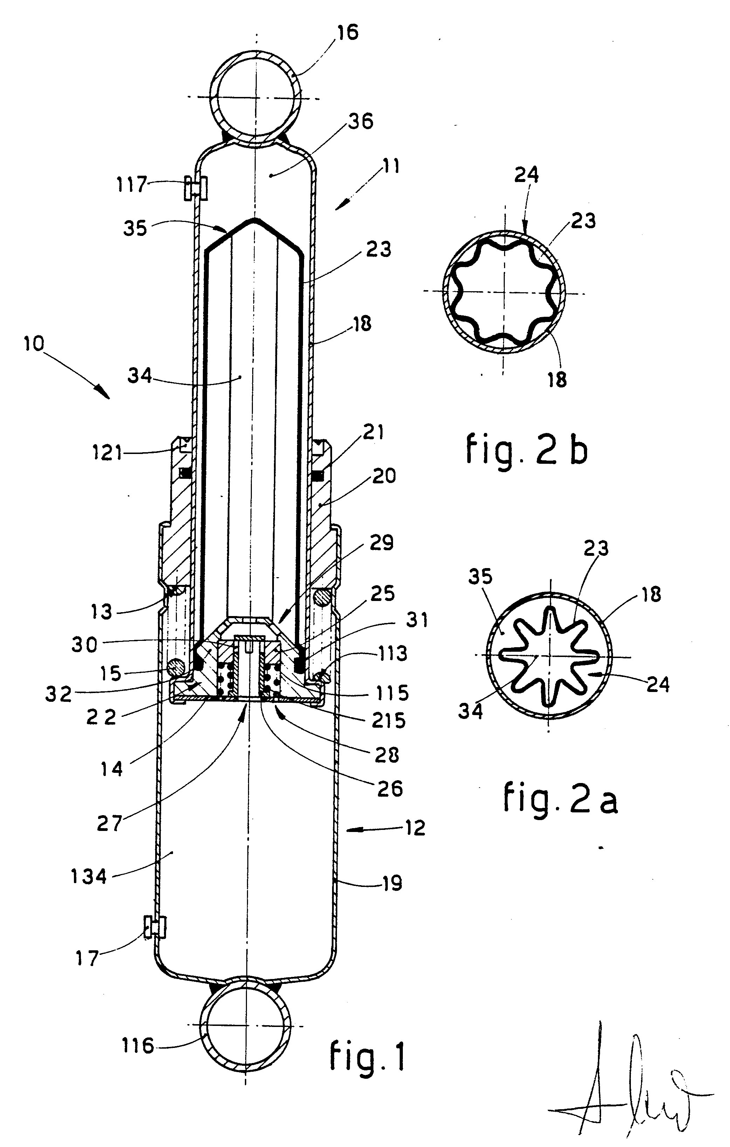

As we said earlier, the plunger 11 has a thin tubular body 18, which is cylindrical on its outside and slides inside a jacket 20 solidly fixed to the tubular body 19 of the cylinder 12. Such fixture can be obtained by welding, riveting or deformation of the tubular body 19 of the cylinder 12 (Fig.1).

An engagement seal between the plunger 11 and jacket 20 is provided by the specific tolerances of the production of the jacket and plunger and by the inclusion of packings 21 and 121.

A valve 117 may be comprised in the plunger 11 and serves to introduce, regulate and control the pressure of gas entering a chamber 36 between a diaphragm 23 and the tubular body 18 of the plunger.

An anchorage clip 16 is included on the tubular body 18 of the plunger and serves to secure one end of the suspension, while the other end of the suspension is secured by an anchorage clip 116 included on the tubular body 19 of the cylinder.

A valve 17 may also be comprised in the tubular body 19 of the cylinder and serves to introduce, control, fill and refill oil within the cylinder 12 and therefore within a chamber 34 inside the diaphragm 23 positioned in the plunger 11.

As we said above, the diaphragm 23 is comprised within the plunger 11 and separates the oil held in the diaphragm from the gas contained in the chamber 36 between the diaphragm 23 and the tubular body 18 of the plunger.

The diaphragm 23 has a lengthwise corrugated profile 24 which terminates with a pointed portion 35 obtained as an elongation of the corrugated part of the diaphragm 23. Thus the pointed portion 35 forms one single body not differentiated from the lengthwise body of the diaphragm 23.

The development of the peripheral corrugated profile of the diaphragm 23 is advantageously greater than the inner circumference of the tubular body 18 of the plunger.

In a variant the development of the peripheral corrugated profile of the diaphragm 23 is taken as being about equal to the length of the inner circumference of the tubular body 18 of the plunger.

As we said above, the corrugated profile of the diaphragm extends lengthwise and is conformed at its end towards the valve 22 in such a way as to be suitable to fit the body 32 of the valve 22 without producing any points of concentrated tension or a tendency to wear or breakage.

The diaphragm 23 comprises at its end an anchorage ring 31 which is seated and secured in an appropriate groove included in the body 32 of the valve 22.

The clamping of the diaphragm 23 inside the tubular body 18 of the plunger is obtained by deformation, in the resilient field, of part of the diaphragm 23 between the valve body 32 and the inside of the tubular body 18.

The valve 22 is anchored to the end of the tubular body 18 of the plunger and comprises a base plate 14 for correct lodgement of the elements forming the valve.

In a variant the base plate 14 may consist of a separate element by itself, as is shown in the figure.

The conformation of the base of the tubular body 18 of the plunger provides for an abutment 113 against which the spring 15 rests. This enlargement of the tubular body 18 which provides the abutment 113 comprises also a toe of the body 32 of the valve 22.

In a variant the tubular body 18 of the plunger ends and is anchored in the neighbourhood of the toe of the body 32 of the valve 22, and the toe itself forms the abutment 113 for the spring 15 that stores mechanical energy.

The fixture of the valve 22 in the tubular body 18 of the plunger can be obtained by welding or upsetting or by deformation of the tubular body so as to secure the elements forming the valve 22.

The valve 22 comprises the valve body 32, within which is coaxially located a chamber 33 in which a first outer movable valve portion 25 can slide axially with a suitable tolerance of coupling, the lengthwise movement of this first valve portion 25 being resiliently resisted by a spring 115 resting on the valve base plate 14.

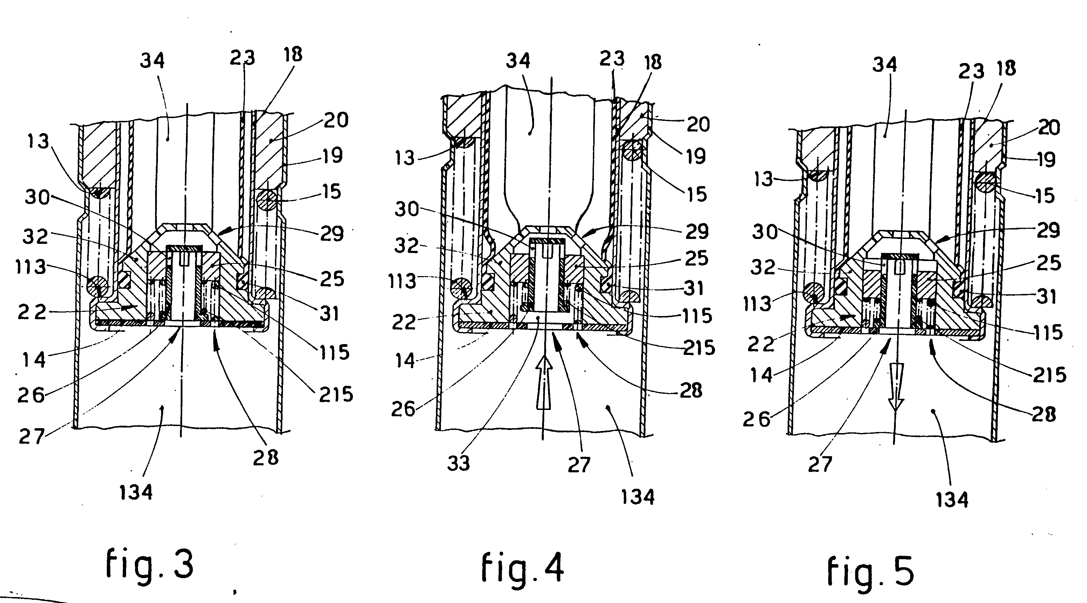

The first movable valve portion 25 is normally kept in a high position (Fig.3).

Next, a partially axially perforated movable second valve portion 26 is included and forms a hollow core able to slide within the first movable valve portion 25 and in seal engagement therewith owing to the tolerances of their coupling.

The lengthwise movement of the second valve portion 26 is resisted resiliently by a spring 215 that cooperates with the first valve portion 25.

The second valve portion 26 is normally kept in a low position (Fig.3).

In their inactive positions the second valve portion 26 and its opposing spring 115 rest on the base plate 14, which comprises a central hole 27 and a plurality of peripheral holes 28.

The central hole 27 cooperates with the hollow core of the second valve portion 26 when that valve portion is rested on the base plate 14 as in Fig.3, that is, when the shock absorber is in its inactive position.

In the case of Fig.3, which shows the shock absorber in its inactive position, as we said above, oil passes into the second valve portion 26 through the central hole 27 and passes on the outside of that valve portion 26 through the peripheral holes 28, a given hydraulic seal between the inside and the outside of the second valve portion 26 being obtained because the base of that valve portion rests on the base plate 14.

The second valve portion 26 includes in its upper part some slits 30, which provide communication between the hollow core and the outside of that valve portion in a position opposite to that of entry of oil and to the first valve portion 25.

When the valve 22 is in its closed position, the slits 30 are shut by the first valve portion 25, as can be seen in Fig. 3, which therefore shows a condition of the valve when the suspension is free of load and is inactive.

Instead, when the suspension becomes loaded owing to an impact (Fig.4), the second valve portion 26 is thrust upwards by oil, which passes first of all through the central hole 27 and thereafter through the peripheral holes 28 too.

Such inflow of oil through the holes 27-28 pushes the second valve portion 26 upwards until the slits 30 are higher than the upper edge of the first valve portion 25, thus enabling the oil to flow out and to pass through transit holes 29 into the chamber 34 formed inside the diaphragm 23.

Entry of oil in the diaphragm chamber 34 is resisted resiliently by the gas contained in the chamber 36 between the diaphragm 23 and the tubular body 18 of the plunger.

Thus during the phase of absorption of impact the oil flows through the central hole 27 into the second valve portion 26 and therefrom through the slits 30 and transit holes 29 into the diaphragm chamber 34 so that, when the slits 30 are open, the oil can pass practically continuously from the cylinder chamber 134 to the diaphragm chamber 34.

The condition of the oleopneumatic suspension during an overload phase as shown in Fig.4.

Instead, Fig.5 shows the suspension working in its recoil phase during return to its initial position of Fig.3. In this case the oil under pressure in the diaphragm chamber 34 acts on the first movable valve portion 25 through the transit holes 29.

The first valve portion 25 overcomes the resistance of the springs 115-215 and falls, thus freeing the slits 30 and enabling the oil to pass from the diaphragm chamber 34 through the transit holes 29, slits 30, the inside of the second valve portion 26 and the central hole 27 into the cylinder chamber 134.

When the oil flows from the cylinder chamber 134 to the diaphragm chamber 34, it has to overcome not only the action of the valve 22 but also the resistance provided by gas in the chamber 36 located between the diaphragm 23 and the tubular body 18 of the plunger.

The diaphragm 23 is deformed during normal working by the thrust of the oil flowing into the diaphragm chamber 34 and, when necessary, the pointed portion 35 of the diaphragm is also deformed slightly through the need for mechanical adaptation.

The deformation of the pointed diaphragm portion 35 is a result of the conformation of that portion and of the method of its embodiment and also of the thickness of the material of which that portion consists.

The deformation of the diaphragm 23, which has to be deformed but does not necessarily have to act in the resilient field, is such that instead of its corrugated profile 24 the diaphragm 23 may reach a substantially circular profile so as to fit the inside of the tubular body 18 of the plunger.

However, the deformation of the diaphragm 23 does not necessarily have to reach a circular tubular figure in the event of maximum overload, for its deformation depends only on the ratio between the outer circumference of the diaphragm 23 and the inner circumference of the tubular body 18 of the plunger.

Moreover, such deformation depends on the volume of oil sent into the diaphragm chamber 34 and on the pressure of the gas.

The diaphragm 23 will undergo lengthwise deformation or extension only in the event of a heavy overload, this being due to the conformation of the diaphragm itself and the ratios between the diaphragm and the inner circumference of the tubular body 18 of the plunger.

According to the invention such extension at limit working values will consist of an infinitesimal dimension and will be in a field in which there is no accumulation of extension even after a great number of prolonged cycles of limit working conditions.

## Claims

1 - Suspension of an oleopneumatic type for vehicles which has the functions of a shock absorber and comprises a plunger (11) with a tubular body (18) fitted so as to be able to slide within a cylinder (12) having a tubular body (19), both the plunger (11) and the cylinder (12) being closed at their free ends with a seal engagement, a bag-type diaphragm (23) being included in the plunger (11) with the tubular body (18) and separating a volume of gas (36) positioned between the diaphragm (23) and the tubular body (18) of the plunger (11) from a volume of oil (34) contained in the diaphragm (23) and in the tubular body (19) of the cylinder (12), the suspension being characterized in that it includes:
-the diaphragm (23) of a tubular, elongate shape with a corrugated peripheral conformation and an upper pointed, closed end (35),
-a ring (31) to anchor the diaphragm (23) between the tubular body (18) of the plunger (11) and a valve (22),
-a spring (15) for the mechanical storage of energy, which functions between the plunger (11) and the cylinder (12), and
-a valve (23) with two coaxial slide portions (25-26) able to move axially and resiliently resisted.

2 - Suspension as claimed in Claim 1, in which the anchorage ring (31) cooperates with a circular hollow in the body (32) of the valve (22), and a tract of the diaphragm (23) in the neighbourhood of the anchorage ring (31) is tightened in the resilient field in a hollow between the body (32) of the valve (22) and the tubular body (18) of the plunger (11).

3 - Suspension as claimed in Claim 1 or 2, in which the outer dimension of an abutment (113) comprised in the tubular body (18) of the plunger (11) is smaller than the inner dimension of the tubular body (19) of the cylinder (12), the seal engagement and guiding of the plunger (11) being provided by a jacket (20) anchored to the inside of the cylinder (12) and forming another abutment (13) for the energy storage spring (15).

4 - Suspension as claimed in any claim hereinbefore, in which the elongation of the tubular body (18) of the plunger (11) constituting the abutment (113) cooperates with the body (32) of the valve (22) in the reciprocal clamping of the tubular body (18), valve body (32) and valve (22).

5 - Suspension as claimed in any claim hereinbefore, in which a base plate (14) including a central hole (27) and peripheral holes (28) is comprised in cooperation with that part of the body (32) of the valve (22) which faces a chamber (134) in the cylinder (12).

6 - Suspension as claimed in any claim hereinbefore, in which two axially movable, coaxial, concentric valve portions (25-26) are included in a chamber (33) located axially in the body (32) of the valve (22).

7 - Suspension as claimed in any claim hereinbefore, in which the first outer movable valve portion (25) can slide in the valve chamber (33) and is normally kept in a high position by a spring (115) rested on the base plate (14) of the valve (22).

8 - Suspension as claimed in any claim hereinbefore, in which the second inner movable valve portion (26), which is partially perforated axially and comprises peripheral slits (30), is able to slide axially within the first outer movable valve portion (25) and is normally kept in a low position by a spring (215) rested on the first outer movable valve portion (25).

9 - Suspension as claimed in any claim hereinbefore, in which the second inner movable valve portion (26) in its low position has its slits (30) shut by the first outer movable valve portion (25) in a high position.

10 - Suspension as claimed in any of Claims 1 to 5 inclusive, in which the outer circumferential development of the diaphragm (23) when not under internal load has a length greater than the inner circumference of the tubular body (18) of the plunger (11).

11 - Suspension as claimed in any of Claims 1 to 9 inclusive, in which the outer circumferential development of the diaphragm (23) when not under internal load is about equal to the inner circumference of the tubular body (18) of the plunger (11).

12 - Suspension as claimed in any claim hereinbefore, in which the hollow core of the second inner movable valve portion (26) in the low position of that portion cooperates with the central hole (27) in the base plate (14) of the valve (22).

13 - Suspension as claimed in any claim hereinbefore, in which the peripheral holes (28) in the base plate (14) cooperate with the first outer movable valve portion (25) when the second inner movable valve portion (26) is in its normal low position.

fig. 1

fig. 2 b

fig. 2 a

fig. 3          fig. 4          fig. 5

0 251 365